# EUROPEAN PATENT APPLICATION

(11) **EP 4 725 723 A1**
(43) Date of publication of application: **15.04.2026**
(21) Application number: 24819134.8
(22) Date of filing: 20.05.2024
(51) Int. Cl.: B60G 17/015

(54) **METHOD FOR CONTROLLING VARIABLE DAMPER**

(30) Priority: 09.06.2023 JP 2023095696
(71) Applicant: THK CO., LTD., Minato-ku Tokyo 108-8506 (JP)
(72) Inventor: NISHIDE, Tetsuhiro, Tokyo 108-8506 (JP); WATANABE, Yoshihito, Tokyo 108-8506 (JP); MINAMI, Toshiro, Tokyo 108-8506 (JP); HANAJIMA, Yukihiro, Tokyo 108-8506 (JP); NAGAURA, Masaki, Tokyo 108-8506 (JP); KAMADA, Shinobu, Tokyo 108-8506 (JP)
(74) Representative: Prinz & Partner mbB
(86) International application number: PCT/JP2024/018429
(87) International publication number: WO 2024/252901

(57) **Abstract**

Provided is a control method for a variable damper for improving tire grip and vibration resistance to achieve vehicle travel with high road surface-following ability during rough road travel. The control method for a variable damper is for a vehicle in which a wheel of one of front and rear sets of wheels is driven by an in-wheel motor housed in the wheel, a wheel of the other set is driven by an on-board motor provided in a vehicle body, and at least a wheel driven by the in-wheel motor is attached to a suspension apparatus that includes a variable damper capable of adjusting a damping force, wherein the variable damper adjusts the damping force depending on a wheel speed of the wheel driven by the in-wheel motor.

## Description

### TECHNICAL FIELD

The present invention relates to a control method for a variable damper, and in particular, to a control method for a variable damper attached to a wheel of a vehicle equipped with an in-wheel motor.

### BACKGROUND ART

There has been a known control method for improving handling stability of a vehicle during travel of the vehicle on a rough road by providing an electronic suspension to the vehicle and making an adjustment to a damping force of the electronic suspension.

For example, a suspension control apparatus for a vehicle described in Patent Literature 1 is a suspension control apparatus for a vehicle including: an up-down acceleration detection device configured to detect acceleration in an up-down direction of a vehicle; and a suspension control device including a rough road determination function configured to determine whether or not a vehicle road is a rough road based on an up-down acceleration detected by the up-down acceleration detection device and a rough-road sense/control function configured to set a damping force of a suspension mechanism of the vehicle to a reasonably hard condition when it is determined that the vehicle road is the rough road, wherein the suspension control apparatus comprises: a driving-wheel speed detection device configured to detect a wheel speed of a driving wheel; and a non-driving-wheel speed detection device configured to detect a wheel speed of a non-driving wheel, the suspension control device includes a spin determination function configured to determine whether or not the driving wheel is spinning based on a difference between the wheel speed of the driving wheel detected by the driving-wheel speed detection device and the wheel speed of the non-driving wheel detected by the non-driving-wheel speed detection device, and a rough-road/spin sense/control function configured to set the damping force of the suspension mechanism to a reasonably soft condition when it is determined that the vehicle road is a rough road and the driving wheel is spinning.

### Citation List

### Patent Literature

Patent Literature 1: Japanese Patent Laid-Open No. 6-336109

### DISCLOSURE OF THE INVENTION

### PROBLEMS TO BE SOLVED BY THE INVENTION

Here, as an electric vehicle (EV) that relies on an electric motor or a motor to drive the vehicle, in addition to what is called an "on-board motor type" that includes a motor mounted in a vehicle body in a similar way as to a conventional vehicle including an internal combustion engine mounted therein and obtains a driving force by transmitting a rotational force of the electric motor to each wheel, what is called an "in-wheel motor type" that includes a motor housed in a wheel disc of a wheel assembly to drive the wheel has been known.

Since a large part of the driving force of the electric motor is transmitted directly to wheels, an electric vehicle of such an in-wheel motor type has various advantages in that energy losses due to conventional gears, a driving shaft, or the like are reduced, and moreover, it is easy to reduce a vehicle-body weight and secure a cabin volume because it is not necessary to arrange these gears, a driving shaft, or the like in the vehicle body.

However, it has been known that the electric vehicle of an in-wheel motor type suffers from an increase in the weight of a wheel because a motor is housed in the wheel, which leads to degradation of ride comfort and maneuverability due to an increase in what is called an unsprung weight. Furthermore, when there is a difference in the unsprung weight between front and rear wheels, for example, in a case in which the front wheels are driven by an on-board motor system and the rear wheels are each driven by an in-wheel motor system, tire grip degrades due to large vibration of a rear wheel while travelling on a rough road such as a Belgian road, which is a stone-paved road paved with rectangular stones. Furthermore, in the case of the vehicle described above, increased weight of the rear wheels also leads to an increase in unsprung vibration during travel on a rough road, which leads to degradation of sprung vibration either, and therefore, there has been a demand for suppressing vibration during travel on a rough road to improve tire grip and vibration resistance.

An object of the present invention, which has been made to solve the above-described problem, is to provide a control method for a variable damper, which controls a variable damper provided in a vehicle in which a wheel of one of front and rear sets of wheels is driven by an in-wheel motor and a wheel of the other of front and rear sets of wheels is driven by an on-board motor, for improving tire grip and vibration resistance to achieve vehicle travel with high road surface-following ability during rough road travel.

### MEANS FOR SOLVING THE PROBLEMS

A control method for a variable damper according to the present invention to solve the above-described problem is a control method for a variable damper for a vehicle in which a wheel of one of front and rear sets of wheels is driven by an in-wheel motor housed in the wheel, a wheel of the other set is driven by an on-board motor provided in a vehicle body, and at least a wheel driven by the in-wheel motor is attached to a suspension apparatus that includes a variable damper capable of adjusting a damping force, wherein the variable damper adjusts the damping force depending on a wheel speed of the wheel driven by the in-wheel motor.

### EFFECTS OF THE INVENTION

According to the control method for a variable damper according to the present invention, whether a wheel is in a state of being pressed against the road surface or being lifted is determined based on the wheel speed of the wheel driven by the in-wheel motor and the damping force of the variable damper is adjusted depending on the state, and therefore, tire grip during travel on a rough road is improved and vibration can be reduced, so that it is possible to travel with high road surface-following ability during rough road travel.

### BRIEF DESCRIPTION OF THE DRAWINGS

[FIG. 1] FIG. 1 is a schematic diagram of a vehicle equipped with a variable damper to which a control method for a variable damper according to an embodiment of the present invention is applied.
[FIG. 2] FIG. 2 is a diagram illustrating a suspension apparatus with a variable damper to which the control method for a variable damper according to the embodiment of the present invention is applied.
[FIG. 3] FIG. 3 is a block diagram illustrating a basic control block of the control method for a variable damper according to the embodiment of the present invention.
[FIG. 4] FIG. 4 is a diagram indicating a control law of the control method for a variable damper according to the embodiment of the present invention.
[FIG. 5] FIG. 5 is a graph of simulated rough road travel of a vehicle to which the control method for a variable damper according to the embodiment of the present invention is applied, indicating a relationship between a wheel input load and a travel distance.
[FIG. 6] FIG. 6 is a graph indicating results of sensory evaluation according to the driver of a vehicle to which the control method for a variable damper according to the embodiment of the present invention is applied.

### MODE FOR CARRYING OUT THE INVENTION

An embodiment of a control method for a variable damper according to the present invention will now be described with reference to drawings. The embodiment described below is not intended to limit the invention according to claims, and all combinations of features described in the embodiment are not necessarily essential for solution of the present invention.

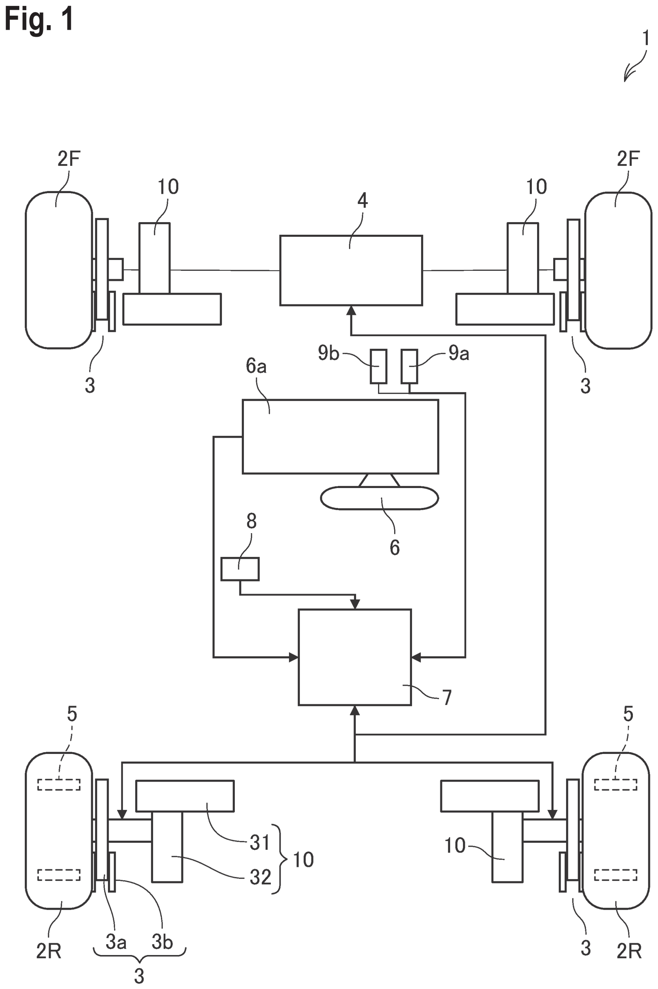

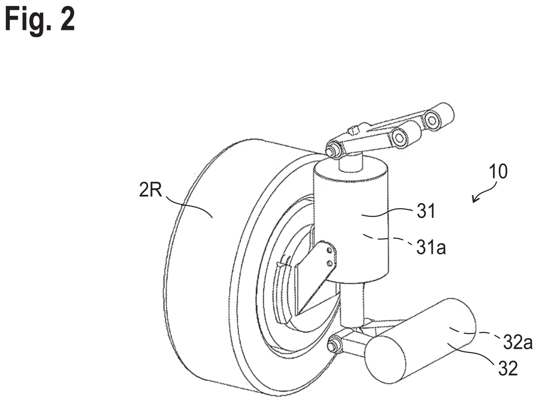

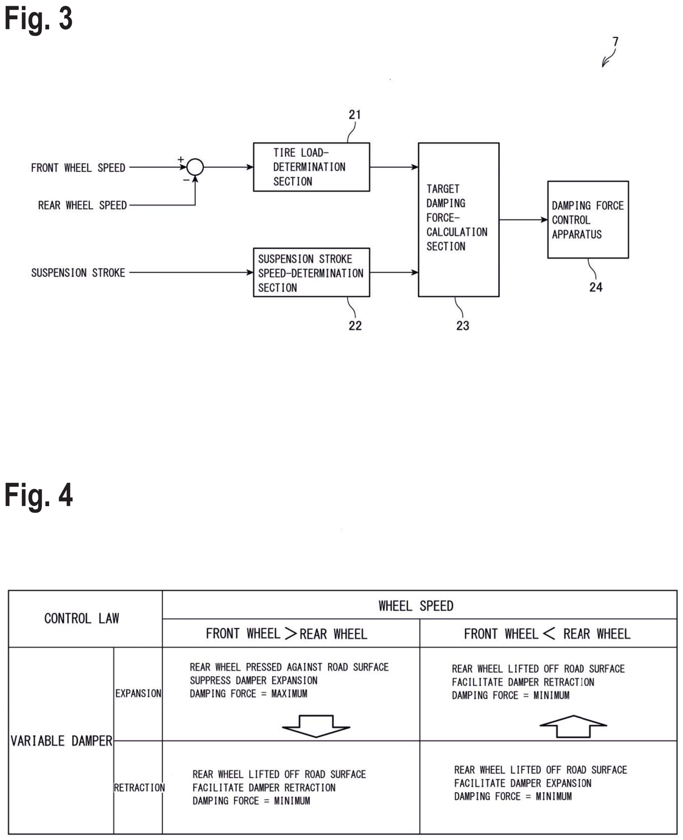

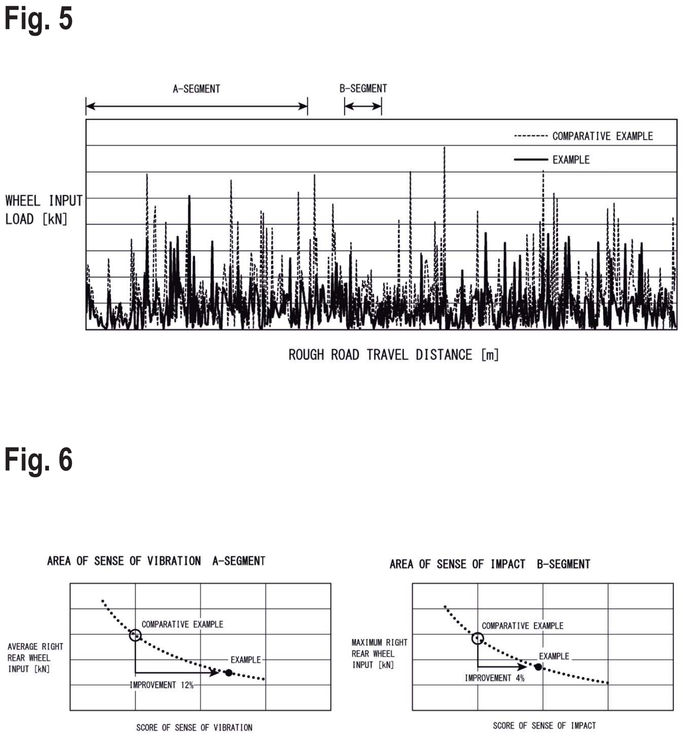

FIG. 1 is a schematic diagram of a vehicle equipped with a variable damper to which a control method for a variable damper according to an embodiment of the present invention is applied, FIG. 2 is a diagram illustrating a suspension apparatus with a variable damper to which the control method for a variable damper according to the embodiment of the present invention is applied, FIG. 3 is a block diagram illustrating a basic control block of the control method for a variable damper according to the embodiment of the present invention, FIG. 4 is a diagram indicating a control law of the control method for a variable damper according to the embodiment of the present invention, FIG. 5 is a graph of simulated rough road travel of a vehicle to which the control method for a variable damper according to the embodiment of the present invention is applied, indicating a relationship between a wheel input load and a travel distance, and FIG. 6 is a graph indicating results of sensory evaluation according to the driver of a vehicle to which the control method for a variable damper according to the embodiment of the present invention is applied.

As illustrated in FIG. 1, the control method for a variable damper according to the embodiment is executed by an electronic control unit 7 mounted in a vehicle 1. The vehicle 1 includes front wheels 2F located at the front left and right sides of the vehicle 1 and rear wheels 2R located at the rear left and right sides thereof. The front wheels 2F and the rear wheels 2R each include a friction brake apparatus 3 that brakes the rotation of the wheel by a frictional force.

The front wheel 2F is driven by an on-board motor 4 mounted in the vehicle body, and the rear wheel 2R is driven by an in-wheel motor 5 housed in the rear wheel 2R. Furthermore, the front wheel 2F is provided with a steering mechanism (not illustrated) that causes the front wheel 2F to tilt toward a steering direction in response to operation of a steering wheel 6 located at the driver's seat and functions as a steerable wheel. Various configurations known in the art can be adopted to the steering mechanism, and for example, a by-wire system that includes a steer actuator can be used.

The steer actuator is wired such that it can receive a signal from the electronic control unit 7 that receives a signal from an operating unit 6a, which includes the steering wheel 6 operated by a driver, to perform predetermined processing, and controls the front wheels 2F to achieve a steering angle corresponding to the steering wheel 6 operated by the driver.

Furthermore, the electronic control unit 7 is connected to each of the on-board motor 4 and the in-wheel motor 5 and, when an accelerator pedal 9a is operated by the driver, controls the on-board motor 4 and the in-wheel motor 5 to provide a driving force in response to the amount of operation of the accelerator pedal 9a. Furthermore, when a brake pedal 9b is operated by the driver, the electronic control unit 7 controls the friction brake apparatus 3 as well as the on-board motor 4 and the in-wheel motor 5 to operate as regenerative braking devices in response to the brake operation.

The friction brake apparatus 3 includes a brake disc 3a that has a disc shape and is attached so as to be coaxial with each axle of the front wheels 2F and the rear wheels 2R, and a caliper 3b equipped with brake pads for gripping the brake disc 3a in an axial direction. The caliper 3b is connected to a master cylinder (not illustrated) that is actuated by the brake operation when the driver operates the brake pedal 9b, and generates a frictional force by being pressed against the brake disc 3a due to an amplification effect of oil or air pressure caused by the master cylinder. Note that the friction brake apparatus 3 can receive a signal from the electronic control unit 7 to adjust the degree of pressing of the caliper 3b such that the frictional force between the brake pad and the brake disc 3a is adjusted as necessary regardless of the pedal force applied by the driver to the brake pedal 9b.

The on-board motor 4 and the in-wheel motor 5 receive a signal from the electronic control unit 7 depending on the opening degree of the accelerator pedal 9a operated by the driver and rotate such that the vehicle 1 moves forward in the direction of travel or moves backward against the direction of travel. Furthermore, during braking while the brake pedal 9b is operated, the on-board motor 4 and the in-wheel motor 5 are operated as an electric generator in reverse by inputting shaft rotation for use as a regenerative braking apparatus that converts kinetic energy into electrical energy, which is retrieved and consumed for braking.

The electronic control unit 7 includes a microprocessor, which is a control device, and is operated by electricity supplied from a battery, which is not illustrated. The electronic control unit 7 receives signals from the operating unit 6a, the brake pedal 9b, the accelerator pedal 9a, and the like, processes various signals, and transmits signals for driving the on-board motor 4 and the in-wheel motor 5 at a predetermined rotational speed.

The front wheels 2F and the rear wheels 2R are each attached to an active suspension apparatus 10. As illustrated in FIG. 2, the active suspension apparatus 10 is attached between each wheel (for example, rear wheels 2R) and the vehicle body and dampens vibration or impact input from a road surface, keeps the attitude of the vehicle body, and ensures driving stability. The active suspension apparatus 10 includes an active suspension 31 and a variable damper 32.

The active suspension 31 includes a spring, which is a helical compression spring, and a ride height actuator 31a that suppresses movement of the vibrating spring and can adjust the height of the vehicle body from the ground.

The ride height actuator 31a includes, for example, a ball screw mechanism including a ball screw and a ball screw nut threaded together and generates a damping force from a resistive force of a motor that generates electricity through an up-and-down expanding-and-retracting motion of the ball screw mechanism. Furthermore, the damping force can be adjusted by a propulsive force of the ball screw mechanism that expands and retracts up and down through energization of the motor. In addition, driving the motor in this way to cause the ball screw mechanism to expand and retract up and down causes the entire length of the active suspension 31 to expand and retract, changing the spacing between the wheel and the vehicle body, so that the height of the vehicle body from the ground can be adjusted.

The variable damper 32 is a rotary damper relying on a damping force generated due to magnetorheological resistance. The variable damper 32 includes a variable damper actuator 32a that is connected to the electronic control unit 7 and capable of adjusting the damping force through current control.

The variable damper actuator 32a is held by a bearing and the like, for example, such that a rotating shaft is rotatable relative to a body case. A coil and a rotor are incorporated in the body case and the rotating shaft is attached to the rotor. There is a clearance around the rotor and the clearance is filled with magnetic fluid. When current is caused to flow through the coil in the variable damper actuator 32a thus constructed, viscosity resistance of the filled magnetic fluid increases, so that a force that impedes rotation of the rotor is generated. Controlling the current input to the coil in this way enables the variable damper actuator 32a to adjust the damping force of the variable damper 32.

The variable damper 32 as described above provides excellent responsiveness because a damping force can be electrically induced, and it is possible to suppress vibration of the vehicle body even when the road surface during travel has high-frequency steps. Furthermore, the ability to steplessly adjust the viscosity resistance of the magnetic fluid makes it possible to perform control to minimize the current to generate a required torque, and therefore possible to reduce power consumption.

The active suspension apparatus 10 is connected to the electronic control unit 7 and is configured to be able to transmit an expansion/retraction amount of the active suspension 31 and the damping force of the variable damper 32 to the electronic control unit 7. Furthermore, the vehicle 1 includes a vehicle-height sensor 8 attached thereto. The vehicle-height sensor 8 is a sensor capable of measuring the distance from a lower surface of the vehicle 1 to a road surface, and preferably, for example, an optical sensor, an ultrasonic distance sensor, and the like are used. Vehicle-height data measured by the vehicle-height sensor 8 is transmitted to and processed by the electronic control unit 7.

Next, a control method of a control method for the variable damper 32 according to the embodiment will now be described. The control method for the variable damper 32 according to the embodiment controls the damping force of the variable damper 32 of the active suspension apparatus 10 attached to the rear wheel 2R of the vehicle 1 described above.

As illustrated in FIG. 3, the electronic control unit 7 includes a tire load-determination section 21 that acquires wheel rotational speeds of the front wheel 2F and the rear wheel 2R and determines a load on the front wheel 2F and the rear wheel 2R, a suspension stroke speed-determination section 22 that acquires a suspension stroke of the active suspension 31 and determines a suspension stroke speed, a target damping force-calculation section 23 that calculates a target damping force from the tire load and the suspension stroke speed obtained from the tire load-determination section 21 and the suspension stroke speed-determination section 22, and a damping force control apparatus 24 that controls the variable damper 32 to achieve the calculated target damping force.

While the damping force control apparatus 24 may always be in operation, it is preferable to set the damping force control apparatus 24 to be put in operation when it is determined that the vehicle 1 is travelling on a highly uneven, rough road, for example. For the determination of whether or not the vehicle is travelling on a rough road, the damping force control apparatus 24 may be set to be put in operation when vehicle-height data obtained from the vehicle-height sensor 8 exceeds a predetermined range of fluctuation, or whether or not the vehicle is travelling on a rough road may be determined by image processing of image data of the road surface obtained from an on-board camera, which is not illustrated.

The target damping force-calculation section 23 compares wheel speeds between the front wheel 2F and the rear wheels 2R based on the tire load determined by the tire load-determination section 21. Furthermore, since the direction of stroke can be known from the suspension stroke speed determined by the suspension stroke speed-determination section 22, the target damping force-calculation section 23 determines whether the variable damper 32 is expanded or retracted. The target damping force-calculation section 23 calculates the target damping force for the variable damper 32 according to a control law indicated in FIG. 4 depending on the wheel speed and the state of the variable damper.

Specifically, when the wheel speed of the rear wheel 2R is lower than the wheel speed of the front wheel 2F and the variable damper 32 is in an expanded state, the rear wheel 2R during travel on a rough road is in a state of being pressed against the road surface. At this time, the rear wheel 2R is in an over-loaded state and the tire grip is degraded, and therefore, the target damping force is maximized such that the damping force increases to suppress expansion of the variable damper 32.

Thereafter, when the variable damper 32 makes a transition to a retracted state, the rear wheel 2R during travel on a rough road is in a state of being lifted off the road surface, which is a state in which overload on the rear wheel 2R is improved. At this time, the target damping force is minimized such that the damping force decreases to facilitate retraction of the variable damper 32.

Next, when the wheel speed of the rear wheel 2R is higher than the wheel speed of the front wheel 2F and the variable damper 32 is in a retracted state, the rear wheel 2R during travel on a rough road is in a state of being lifted off the road surface. At this time, the rear wheel 2R is in an under-loaded state and the tire grip is degraded. At this time, the target damping force is maximized such that the damping force increases to suppress retraction of the variable damper 32.

Thereafter, when the variable damper 32 makes a transition to an expanded state, the rear wheel 2R during travel on a rough road is in a state of being brought into contact with the road surface, which is a state in which underload on the rear wheel 2R is improved. At this time, the target damping force is minimized such that the damping force decreases to facilitate expansion of the variable damper 32.

As described above, the control law is changed based on the wheel speed of each of the front wheel 2F and the rear wheel 2R and the state of the variable damper 32 to control the damping force of the variable damper 32 of the rear wheel 2R such that the wheel speed of the rear wheel 2R, which includes the in-wheel motor 5 and has a large unsprung weight, matches with the wheel speed of the front wheel 2F that has a smaller unsprung weight. Accordingly, the road surface-following ability of the rear wheel 2R during travel on a rough road is improved, which suppresses a skid and improves tire grip, and therefore, it is possible to suppress unsprung vibration and sprung vibration.

Next, simulation results on a relationship between a wheel input load and a travel distance of simulated rough road travel of a vehicle to which the control method for a variable damper according to the embodiment is applied, and results of sensory evaluation according to the driver of a vehicle to which the control method for a variable damper according to the embodiment is applied will be described.

As illustrated in FIG. 5, it can be seen that in comparison with a comparative example of a simulated vehicle with a damper known in the art, the wheel input load is reduced in the example to which the control method for a variable damper according to the embodiment is applied. Furthermore, it is indicated that unsprung vibration is suppressed because the wheel input load is reduced. It can also be observed that the amplitude of the tire input load is reduced, so that it can be seen that the tire grip is improved.

Next, the sensory test was conducted to see how a driver, who rode and compared a vehicle to which the control method for a variable damper according to the embodiment is applied and a vehicle known in the art, felt vibration of the vehicles. In the sensory test, how the vibration of the vehicle was felt along a defined driving segment while driving the vehicle was numerically represented for evaluation.

As illustrated in FIG. 6, in the sensory test, the degree of feeling vibration was numerically evaluated for each of a sense of vibration when the driver felt a large continuous vibration and a sense of impact when the driver felt a large vibration. The road surface used in the sensory test was a rough road similar to a Belgian road used in simulation in FIG. 5, on which the vehicle was actually driven, and evaluation of a sense of vibration was made in the range of A-segment and evaluation of a sense of impact was made in the range of B-segment. For the evaluation of a sense of vibration, the vertical axis shows average values of wheel input loads in the range of A-segment in FIG. 5, and the horizontal axis shows the degrees of driver's feel. Furthermore, for the evaluation of a sense of impact, the vertical axis shows maximum values of wheel input in the range of B-segment in FIG. 5, and the degrees of driver's feel were plotted along the horizontal axis in the same way as in a sense of vibration.

As illustrated in FIG. 6, it can be seen that in comparison with the comparative example, the sensory evaluation of the example exhibits improvement of 0.6 points in the evaluation of a sense of vibration and improvement of 0.2 points in the evaluation of a sense of impact. That is, according to the control method for a variable damper according to the embodiment, in comparison with the vehicle known in the art, the score of a sense of vibration and a sense of impact is improved to 2.4 points, which is an average of 2.6 points in the area of a sense of vibration and 2.2 points in the area of a sense of impact, and it has been confirmed as a result of the sensory test that the vehicle vibration is noticeable, but milder than previous.

As described above, according to the control method for a variable damper according to the embodiment, tire grip of the rear wheel 2R equipped with the in-wheel motor 5 can be improved and unsprung vibration can be reduced, so that it is possible to provide a vehicle with high road surface-following ability during rough road travel.

The vehicle to which the control method for a variable damper according to the embodiment is applied is equipped with the active suspension apparatus 10 as described above, and therefore, attitude information of the vehicle can be obtained from a stroke length obtained from the respective active suspension apparatus 10 attached to each wheel or a tilt sensor and the like attached to the vehicle, so that it is possible to appropriately correct the damping force depending on the attitude.

Furthermore, it is possible to correct the damping force such that a resistive force of the suspension is made constant from data of a stroke length and a damping force of the active suspension apparatus 10.

With various correction devices described above, it is possible to achieve further improvement of tire grip and reduction of vibration.

In the above-described embodiments, while description has been made as to a case in which the damping force is controlled by comparing wheel speeds between the front wheel and the rear wheel, the damping force may be controlled based on a relative speed between speeds of the rear wheel equipped with the in-wheel motor 5 and the vehicle. Furthermore, in the above-described embodiments, while description has been made as to when the control method for a variable damper according to the embodiment is applied to the vehicle 1 of a type in which the front wheels 2F are driven by the on-board motor 4, it may be applied to a vehicle in which the front wheels 2F are also driven by the in-wheel motors 5 and the rear wheels are driven by the on-board motor 4. It is obvious from claims that those variations and modifications may be encompassed by the technical scope of the present invention.

### REFERENCE NUMERALS

1: vehicle, 2F: front wheel, 2R: rear wheel, 4: on-board motor, 5: in-wheel motor

## Claims

1. A control method for a variable damper for a vehicle in which a wheel of one of front and rear sets of wheels is driven by an in-wheel motor housed in the wheel, a wheel of another set is driven by an on-board motor provided in a vehicle body, and at least a wheel driven by the in-wheel motor is attached to a suspension apparatus that includes a variable damper capable of adjusting a damping force, wherein
the variable damper adjusts the damping force depending on a wheel speed of the wheel driven by the in-wheel motor.

2. The control method for a variable damper according to claim 1, wherein
the variable damper adjusts the damping force by comparing the wheel speed of the wheel driven by the in-wheel motor and the wheel speed of the wheel driven by the on-board motor.

3. The control method for a variable damper according to claim 1, wherein
the variable damper adjusts the damping force by comparing the wheel speed of the wheel driven by the in-wheel motor and a speed of the vehicle.

4. The control method for a variable damper according to claim 1 or 2, wherein
the vehicle includes the front set of wheels driven by the on-board motor and the rear set of wheels driven by the in-wheel motor.

5. The control method for a variable damper according to claim 1, wherein
the variable damper corrects the damping force based on attitude information of the vehicle.

6. The control method for a variable damper according to claim 1, wherein
the variable damper adjusts the damping force such that a resistive force of the suspension apparatus is kept constant.
